# EUROPÄISCHE PATENTANMELDUNG

(11) **EP 2 174 867 A1**
(43) Veröffentlichungstag der Anmeldung: **14.04.2010**
(21) Anmeldenummer: 08166306.4
(22) Anmeldetag: 10.10.2008
(51) Int. Cl.: B64C 9/32

(54) **Vorrichtung zum Erzeugen von aerodynamischem Widerstand an einem Luftfahrzeug**

(71) Anmelder: Technische Universität München, 80333 München (DE)
(72) Erfinder: Breitsamter, Christian, 85652, Landsham (DE)
(74) Vertreter: Herrmann, Franz

(57) **Zusammenfassung**

Ein Luftfahrzeug (1) weist eine stromaufwärts vor einem Seitenleitwerk (4) angeordnete Bremsklappe (6) auf, die in den das Seitenleitwerk (4) anströmenden Luftstrom ausklappbar ist. Zur Verminderung von strukturdynamischen Belastungen des Seitenleitwerks (4) sind in der Bremsklappe (6) Durchführungen (7, 8) ausgebildet.

## Beschreibung

Die Erfindung betrifft eine Vorrichtung zum Erzeugen von aerodynamischem Widerstand an einem Luftfahrzeug mit wenigstens einer Bremsklappe, die in einen ein Seitenleitwerk anströmenden Luftstrom ausklappbar ist.

Die Erfindung betrifft ferner ein mit der Vorrichtung zum Erzeugen von aerodynamischem Widerstand ausgestattetes Luftfahrzeug sowie ein Verfahren zum Erzeugen von aerodynamischem Widerstand.

Eine derartige Vorrichtung, ein derartiges Luftfahrzeug und ein derartiges Verfahren sind aus der Veröffentlichung BREITSAMTER, C.: "Airbrake induced fin buffet loads on fighter aircraft", in: ICAS 2006, 25th International Congress of the Aeronautical Science, 2006 bekannt. In der Veröffentlichung werden Schüttelerscheinungen untersucht, die beim Einsatz von Luftbremsen (Airbrakes) auftreten. Derartige Luftbremsen verfügen im Allgemeinen über ausklappbare Bremsklappen, die dazu dienen, bei Hochleistungsflugzeugen im Manöverflug über einen weiten Anstellwinkelbereich die Geschwindigkeit des Flugzeugs abrupt zu verringern. Derartige Luftbremsen können hohe strukturdynamische Belastungen an den im Nachlauf befindlichen Komponenten hervorrufen. Insbesondere bei einer zentral, stromauf des Seitenleitwerks angeordneten Luftbremse können strukturdynamische Spitzenbelastungen auftreten, die durch ein Zusammenwirken der aerodynamischen Anregung durch aufgeplatzte Vorderkantenwirbel bei höheren Anstellwinkeln und durch turbulente Nachläufe hervorgerufen werden.

Der erfliegbare Bereich (Flugenveloppe) hochmanövrierfähiger Flugzeuge wird typischerweise durch dynamische aeroelastische Phänomene wie Schüttelerscheinungen (buffeting), Brummen (buzz) und Flattern von Tragflügeln und Leitwerken begrenzt. Tragflügel oder Flügelkomponenten kleiner Streckung und mäßiger bis hoher Vorderkantenpfeilung, wie sie typischerweise bei derartigen Flugzeugen Verwendung finden, erzeugen schon bei mäßigen Anstellwinkel ein Strömungsfeld mit geordneten Vorderkantenwirbeln. Die Bildung von Vorderkantenwirbeln ist einerseits gewollt, da gegenüber einer ausschließlich anliegenden Strömung ein deutlicher Auftriebsgewinn sowie eine Erhöhung des nutzbaren Anstellwinkelbereichs zur Steigerung der Manövrierfähigkeit erzielt werden. Andererseits kommt es bei höheren Anstellwinkeln aufgrund des steigenden adversen Gradienten zu einer Strukturveränderung im Wirbelkern, dem Wirbelaufplatzen. Dies äußert sich in einer abrupten Erweiterung des Wirbelkernquerschnitts verbunden mit einer stromab des Aufplatzpunkts hochturbulenten Strömung. Eine dabei vorherrschende spiralförmige Instabilität bewirkt starke engbandige Geschwindigkeits- und Druckfluktuationen. Diese frequenzspezifischen Fluktuationen können direkt oder durch Induktion zu Schüttelerscheinungen an Flugzeug- oder Strukturkomponenten führen. Die beispielsweise am Seitenleitwerk hervorgerufenen instationären Luftkräfte führen typischerweise zu einer Strukturanregung in den Moden der ersten Biegung und/oder ersten Torsion. Je nach Anregungsintensität kann dies eine Begrenzung der Flugenveloppe für den Bereich hoher Anstellwinkel zur Folge haben.

Aus der US 41 65 849 ist ferner ein Schutzschild für ein an einem Rumpf angebrachtes Triebwerk bekannt, das vom Rumpf des Flugzeugs aus in einen das Triebwerk anströmenden Luftstrom ausklappbar ist. Das Schutzschild kann auch als Luftbremse verwendet werden. In dem Schutzschild sind mit Federkraft beaufschlagte Klappen ausgebildet, die dazu dienen sollen, Kavitationsprobleme im Triebwerk zu vermeiden.

Ausgehend von diesem Stand der Technik liegt der Erfindung daher die Aufgabe zugrunde, eine Vorrichtung zum Erzeugen von aerodynamischem Widerstand in einem ein Seitenleitwerk eines Luftfahrzeugs anströmenden Luftstrom zu schaffen, das den erfliegbaren Bereich möglichst unbeeinträchtigt lässt. Der Erfindung liegt ferner die Aufgabe zugrunde, ein entsprechendes Verfahren zu schaffen.

Diese Aufgaben werden durch eine Vorrichtung mit den Merkmalen des unabhängigen Anspruchs gelöst. In davon abhängigen Ansprüchen sind vorteilhafte Ausgestaltungen und Weiterbildungen angegeben.

Bei der Vorrichtung und dem Verfahren wird eine Bremsklappe verwendet, die in den das Seitenleitwerk anströmenden Luftstrom ausklappbar ist und mit wenigstens einer Durchführung versehen ist, die der Impulserhöhung der Luft im Windschatten der Bremsklappe dient. Versuche haben gezeigt, dass sich durch derartige Durchführungen die Turbulenzen im Nachlauf der Bremsklappe herabsetzen und die periodischen Wirbelablösungen verringern lassen. Dadurch können die strukturdynamischen Belastungen des Seitenleitwerks gering gehalten werden, so dass der erfliegbare Bereich durch das Ausfahren der Bremsklappe kaum eingeschränkt wird.

Bei einer Ausführungsform der Vorrichtung nimmt die Dicke der Bremsklappe von einem rumpfnahen zu einem rumpffernen Ende hin ab. Dadurch können die Biegemomente zum rumpffernen Ende hin klein gehalten werden.

Bei einer weiteren Ausführungsform ist die wenigstens eine Durchführung von einem in der Bremsklappe ausgebildeten Schlitz gebildet, der in Längsrichtung von einem rumpfnahen Ende zu einem rumpffernen Ende verläuft. Es hat sich gezeigt, dass sich insbesondere durch Schlitze, die sich von einem rumpfnahen Ende zu einem rumpffernen Ende erstrecken, die strukturdynamische Belastung des Seitenleitwerks erheblich reduzieren lässt.

Wenn die Durchführung im rumpfnahen Bereich der Bremsklappe angeordnet ist, wird im hohen und sehr hohen Anstellwinkelbereich eine Abmilderung der strukturdynamischen Belastungen des Seitenleitwerks erreicht. Die Durchführung weist dabei vorzugsweise ein trapezförmiges Querschnittsprofil auf, dessen rumpfnahe Unterseite eine Breite zwischen 0,25 B und 0,35 B einer Basisbreite B der Bremsklappe beträgt, während eine rumpfferne Oberseite der Durchführung eine Breite zwischen 0,15 B und 0,2 B der Basisbreite B der Bremsklappe aufweist. Unter Basisbreite B der Bremsklappe soll dabei die Breite der Bremsklappe am rumpfnahen Ende verstanden werden. Die Länge L der Durchführung soll ferner zwischen 0,25 L und 0,35 L der Länge der Bremsklappe liegen.

Bei kleineren Anstellwinkeln lässt sich dagegen die strukturdynamische Belastung des Seitenleitwerks verringern, in dem in einem rumpfnahen Bereich der Bremsklappe wenigstens zwei Durchführungen vorgesehen werden. Die Durchführungen weisen vorzugsweise einen rechteckförmigen Querschnitt auf. Die Breite der Durchführung beträgt dabei vorzugsweise zwischen 0,1 B und 0,2 B der Basisbreite B der Bremsklappe, während die Länge L der Durchführung zwischen 0,25 L und 0,35 L der Länge der Bremsklappe beträgt.

Weitere Vorteile und Eigenschaften der Erfindung gehen aus der nachfolgenden Beschreibung hervor, in der Ausführungsbeispiele der Erfindung anhand der Zeichnung im Einzelnen erläutert werden. Es zeigen:
- Figur 1: eine Vorderansicht eines Hochleistungsflugzeugs mit ausgeschlagener Luftbremse;
- Figur 2: eine perspektivische Ansicht einer ausgeschlagener Luftbremse einschließlich dem auf ein Seitenleitwerk des Hochleistungsflugzeugs wirkenden Nachlauf;
- Figur 3: eine Aufsicht auf die Bremsklappe der Luftbremse;
- Figur 4: eine Seitenansicht eines Seitenleitwerks mit den bei einer Messung verwendeten Messpunkten;
- Figur 5: ein Diagramm, in das die flächengemittelte Druckschwankungsintensität als Funktion des Anstellwinkels für die Fälle mit und ohne Ausschlag der Luftbremse dargestellt ist;
- Figur 6: ein Figur 5 entsprechendes Diagramm, das die Funktion von schlitzförmigen Durchführungen in der Bremsklappe veranschaulicht;
- Figur 7: ein Figur 5 entsprechendes Diagramm, das die Wirkung einer rumpffernen Durchführung in der Bremsklappe zeigt;
- Figur 8: ein Figur 5 entsprechendes Diagramm, das die Wirkung von in einem rumpfnahen Bereich der Bremsklappe angeordneten Durchführungen zeigt; und
- Figur 9: ein Diagramm, mit einem Leistungsspektrum der Druckschwankungen am Seitenleitwerk bei Einsatz einer Bremsklappe mit einer rumpffernen und zwei rumpfnahen Durchführungen;
- Figur 10: ein Diagramm, mit einem Leistungsspektrum der Druckschwankungen am Seitenleitwerk bei Einsatz einer Bremsklappe mit einer rumpffernen Durchführung;
- Figur 11: ein Diagramm, mit einem Leistungsspektrum der Druckschwankungen am Seitenleitwerk bei Einsatz einer Bremsklappe mit rumpfnahen Durchführung; und
- Figur 12: ein Diagramm, das die relative Änderung des Strömungswiderstandskoeffizienten für verschiedene Ausführungen der Bremsklappe zeigt.

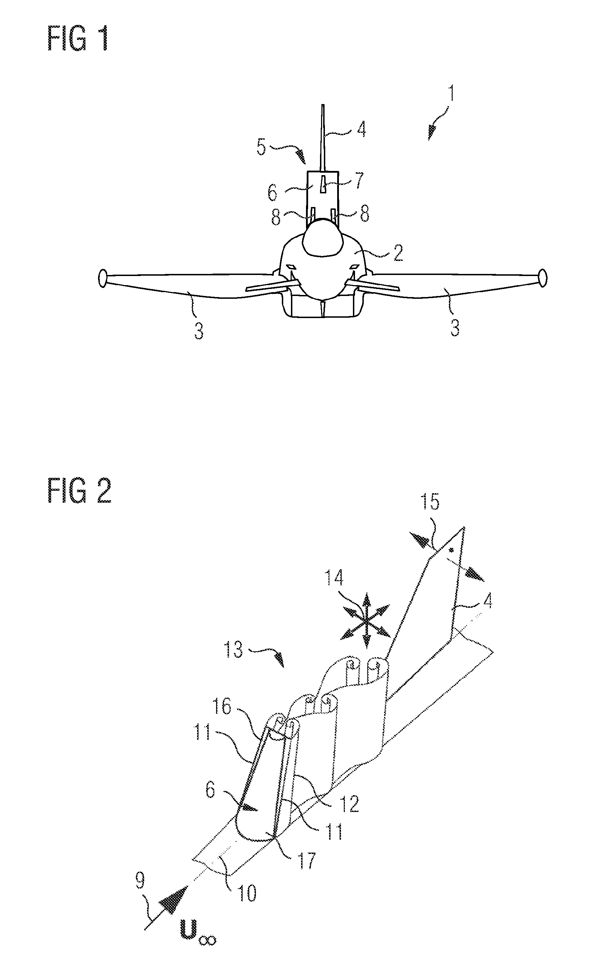

Figur 1 zeigt eine Vorderansicht eines Flugzeugs 1, das sich durch besonders hohe Manövrierfähigkeit auszeichnet. Das Flugzeug 1 weist einen Rumpf 2 und die Spannweite bestimmende Tragflügel 3 auf. Das Flugzeug 1 verfügt ferner über ein Seitenleitwerk 4 und eine auf der Oberseite des Rumpfes 2 angebrachte Luftbremse 5, die eine Bremsklappe 6 umfasst, die in den das Seitenleitwerk 4 anströmenden Luftstrom ausklappbar ist. In einen rumpffernen Bereich der Bremsklappe 6 ist eine mittig angeordnete schlitzartige Durchführung 7 ausgebildet. In einem rumpfnahen Bereich der Bremsklappe 6 sind dagegen zwei außermittig angeordnete schlitzartige Durchführungen 8 vorgesehen.

Figur 2 zeigt eine perspektivische Ansicht der ausgeklappten Bremsklappe 6, die von einer Luftströmung 9 mit Anströmgeschwindigkeit u_{∞} entlang einer Längsachse 10 angeströmt wird. Dabei lösen sich an Außenkanten 11 der Bremsklappe 6 Luftwirbel 12 ab, die einen turbulenten Nachlauf 13 bilden, der zu Schwankungen 14 der Geschwindigkeit und des Drucks im Nachlauf 13 führen. Durch die Schwankungen 14 können Strukturschwingungen im Seitenleitwerk 4 angeregt werden. Die Strukturschwingungen 15 können sowohl Torsionskomponenten als auch Biegekomponenten enthalten.

Es sei angemerkt, dass die von der Luftströmung 9 angeströmte Vorderseite der Bremsklappe 6 von der äußeren Form her einem auf eine rechteckige Grundfläche 16 aufgesetzten Kegelstumpf 17 gleicht.

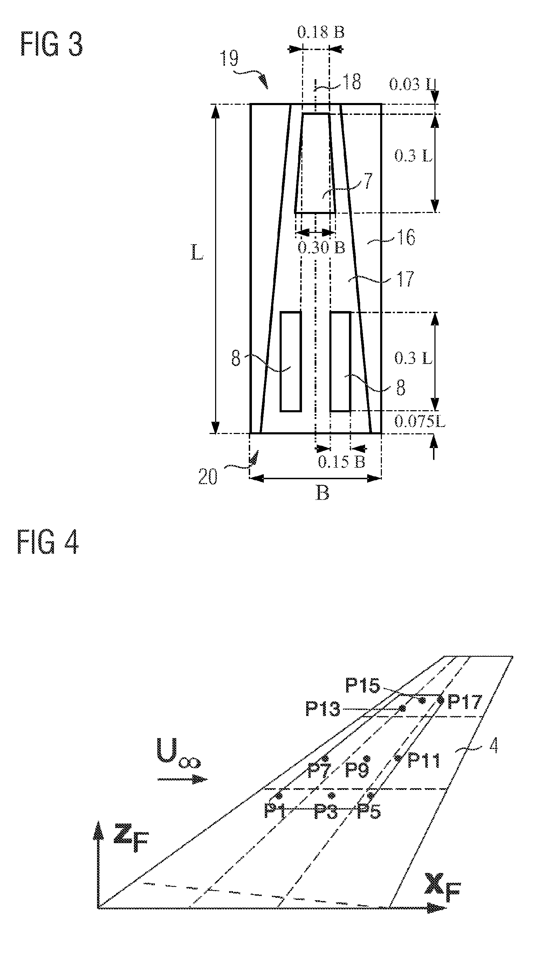

In Figur 3 ist eine Aufsicht auf die von der Luftströmung 9 angeströmte Vorderseite der Bremsklappe 6 dargestellt. Auch in Figur 3 ist die Grundfläche 16 und der auf die Grundfläche 16 aufgesetzte Kegelstumpf 17 erkennbar. Die Bremsklappe 6 ist bezüglich einer mittigen Längsachse 18 symmetrisch ausgebildet. Im Bereich eines rumpffernen Endes 19 der Bremsklappe 6 ist die Durchführung 7 angeordnet, während sich die Durchführungen 8 im Bereich eines rumpfnahen Endes 20 befinden.

Die Grundfläche 16 der Bremsklappe 6 weist eine Bereite B und eine Länge L auf. Die Abmessungen der Durchführung 7 weist vorzugsweise eine trapezförmige Gestalt auf. Die rumpfseitige Basis der Durchführung 7 weist insbesondere eine Breite im Bereich zwischen 0,25 B und 0,35 B der Basisbreite B der Bremsklappe 6 auf, während die Breite der rumpffernen Seite der Durchführung 7 vorzugsweise im Bereich zwischen 0,15 B und 0,25 B liegt. Die Länge der Durchführung 7 liegt vorzugsweise im Bereich zwischen 0,25 L und 0,35 L der Länge L der Bremsklappe 6. Der Abstand des rumpffernen Endes der Durchführung 7 sollte zwischen 0,02 L und 0,05 L vom rumpffernen Ende entfernt sein.

Die rumpfnahen Durchführungen 8 weisen bevorzugt einen rechteckförmigen Querschnitt auf mit einer Breite zwischen 0,1 B und 0,2 B und einer Länge zwischen 0,25 L und 0,35 L. Das rumpfseitige Ende der Durchführungen 8 ist vorzugsweise in einem Abstand zum rumpfnahen Ende 20 angeordnet, der zwischen 0,05 L und 0,1 L liegt. Aus konstruktiven Gründen kann es auch erforderlich sein, die Durchführungen 8 in einem Abstand von bis zu 0,3 L vom rumpfnahen Ende 20 anzuordnen.

Die exakte Position und Größe der Durchführungen 7 und 8 sowie gegebenenfalls auch die Anzahl der Durchführungen 8 hängen von der jeweiligen Größe und Gestaltung der Bremsklappe 6, insbesondere von dem zu erwartenden Nachlauf mit Wirbelablösung sowie der sonstigen Strömungen um den Rumpf 2 und die Tragflächen 3 ab. Außerdem hängt die Konfiguration der Durchführungen 7 und 8 von dem gewünschten Grad der Abminderung und der hinnehmbaren Einbuße an aerodynamischem Widerstand der Bremsklappe 6 ab. In der Regel sollte die gesamte Querschnittsfläche der in der Bremsklappe 6 ausgebildeten Durchführungen 7 und 8 nicht größer als 25 Prozent der Querschnittsfläche der Bremsklappe 6 sein. Gegebenenfalls kann die Einbuße an aerodynamischem Widerstand durch eine Vergrößerung der Querschnittsfläche der Bremsklappe 6 ausgeglichen werden.

Zur Quantifizierung der aerodynamischen Anregungen wurden Zeitreihen der Druckdifferenz zwischen dem Druck am Messort und dem Umgebungsdruck an verschiedenen Positionen des Seitenleitwerks 4 durch instationäre Drucksensoren aufgenommen. Die Positionierung der Drucksensoren ist in Figur 4 dargestellt. Das verwendete Windkanalmodel wurde mit insgesamt achtzehn Drucksensoren ausgestattet. Die Drucksensoren wurden an gegenüberliegenden Orten auf beiden Seiten des Seitenleitwerks 4 angeordnet. Die Messorte sind Figur 4 durch die Positionen P1 bis P17 gekennzeichnet. Der relative Druck an einem der Messorte wurde durch Bezug auf den Staudruck vor dem Seitenleitwerk 4 in einen Druckbeiwert als dimensionslose Größe umgerechnet. Aus den Zeitreihen der Druckbeiwerte wurde der Mittelwert und die Standardabweichung cₚᵣₘₛ in Form der mittleren quadratischen Abweichung berechnet. Der Wert der Standabweichung cₚᵣₘₛ steht daher für die Schwankungsintensität des Druckbeiwerts. Hohe Werte der Standardabweichung cₚᵣₘₛ bedeuten eine hohe aerodynamische Anregung, was mit einer hohen strukturdynamischen Belastung verbunden ist.

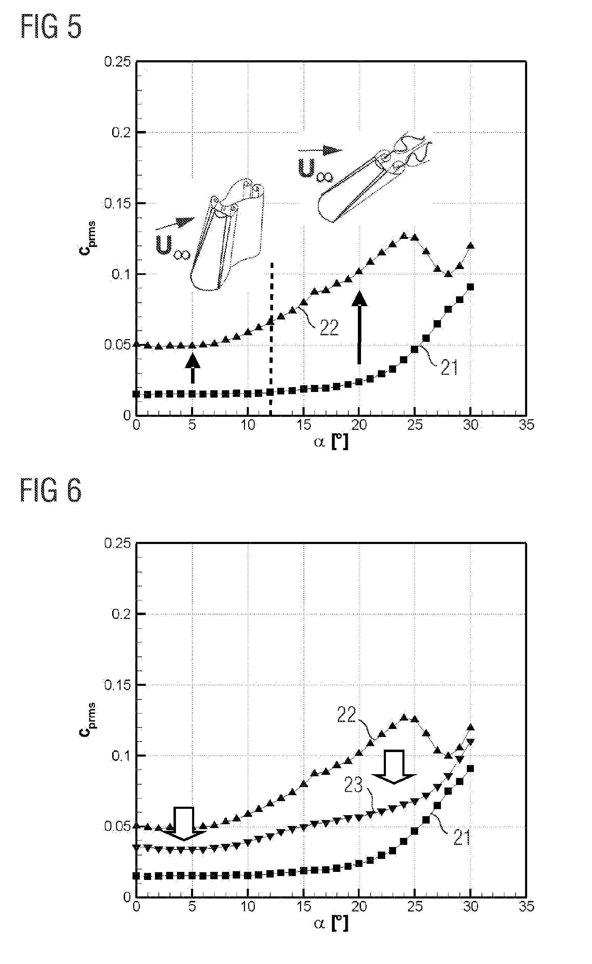

Figur 5 zeigt ein Diagramm, in dem die Standardabweichung cₚᵣₘₛ über den Anstellwinkel α aufgetragen ist. Eine Belastungskurve 21 zeigt den Verlauf der Standardabweichung cₚᵣₘₛ bei angelegter Bremsklappe 6 an. Eine weitere Belastungskurve 22 veranschaulicht den Verlauf der Standardabweichung cₚᵣₘₛ bei einer um einen Ausschlagwinkel η_{AB} = 60° ausgeklappten Bremsklappe, deren Form der Form der Bremsklappe 6 entspricht, die aber keine Durchführungen 7 und 8 aufweist. Bis zu einem Anstellwinkel von etwa α ≈ 10° liegt die Belastungskurve 22 um einen konstanten Wert oberhalb der Belastungskurve 21. Oberhalb eines Anstellwinkel von etwa α ≈ 10° steigt die Belastungskurve 22 signifikant an und erreicht bei einem Anstellwinkel von etwa α ≈ 24° ein absolutes Maximum. Mit weiter steigendem Anstellwinkel α fällt die Belastungskurve 22 steil ab, bevor die Belastungskurve 22 der Belastungskurve 21 folgend erneut ansteigt.

In Figur 6 ist nunmehr neben der Belastungskurve 21 und der Belastungskurve 22 eine weitere Belastungskurve 23 eingezeichnet, die den Verlauf der Standardabweichung cₚₘᵣₛ bei Verwendung der Bremsklappe 6 mit den Durchführungen 7 und 8 wiedergibt. Ein Vergleich der Belastungskurven 22 und 23 zeigt, dass die Belastung aufgrund der Durchführungen 7 und 8 über den gesamten Anstellwinkelbereich wesentlich verringert wird. Im Mittel beträgt die Abminderung etwa 30 bis 40 Prozent. Dementsprechend werden auch die strukturdynamischen Belastungen des Seitenleitwerks 4 verringert.

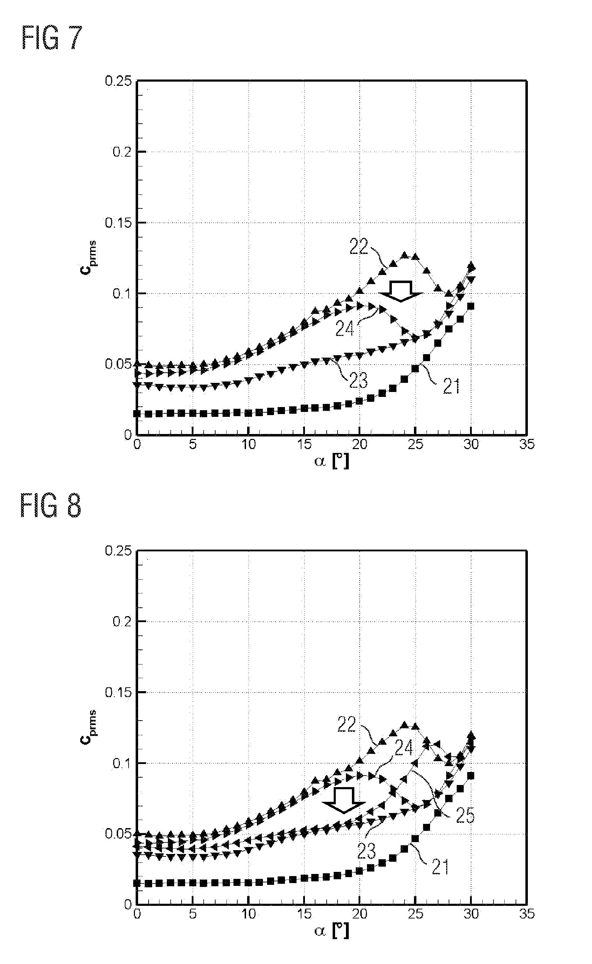

Durch die spezifische Konfiguration der Durchführungen 7 und 8 ist es auch möglich, die Abminderungen der aerodynamischen Anregung auf unterschiedliche Anstellwinkelbereiche abzustimmen, die jeweils unterschiedlichen Strömungsformen des Nachlaufs 13 der Bremsklappe 6 zugeordnet werden können. Im hohen und sehr hohen Anstellwinkelbereich, insbesondere bei α > 12°, bewirkt die Impulserhöhung mittels der oberen Durchführung 7 eine Abminderung, da hier eine axial gerichtete Wirbelströmung vorherrscht. Diese resultiert aus den mit zunehmenden Anstellwinkel α immer geringeren effektiven Anströmwinkel an den Außenkanten 11 der Bremsklappe 6. Um dies zu verdeutlichen, ist in Figur 7 eine weitere Belastungskurve 24 eingezeichnet, die den Verlauf der Standardabweichung cₚᵣₘₛ für den Fall angibt, dass eine Bremsklappe verwendet wird, die lediglich mit einer der Durchführung 7 entsprechenden Durchführung versehen ist. Anhand Figur 7 ist deutlich erkennbar, dass durch die Durchführung 7 insbesondere eine Abminderung im hohen und sehr hohen Anstellwinkelbereich erzielt wird.

Im niedrigen und mäßigen Anstellwinkelbereich, insbesondere bei Anstellwinkel bis α ≈ 12° herrscht dagegen eine periodische Wirbelablösung mit vertikal gerichteten Wirbelachsen vor, wie es dem Nachlauf 13 eines stumpfen Körpers entspricht. Die mit dieser Form des Nachlaufs 13 verbundene dynamische Anregung kann durch die zwei schlitzförmigen Durchführungen 8 abgemindert werden. Diese Abminderung lässt sich anhand Figur 8 und der dort dargestellten Belastungskurve 25 deutlich erkennen.

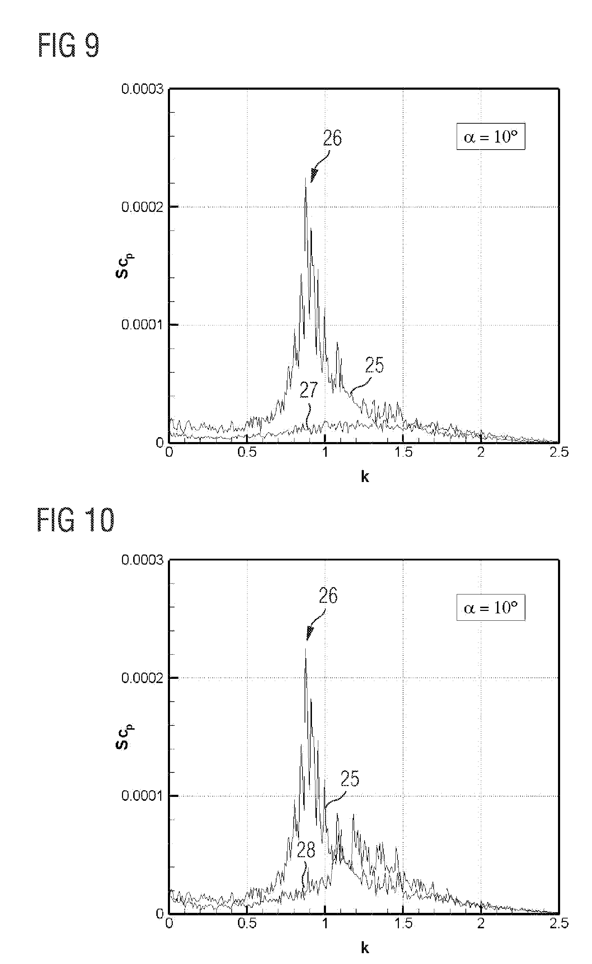

Neben den in den Figuren 5 bis 8 dargestellten Belastungskurven sind auch die Leistungsspektren der Druckbeiwertsschwankungen von Interesse. Die Figuren 9 bis 11 enthalten Diagramme, in denen die spektrale Leistungsdichte Scₚ der Druckbeiwertschwankungen an der Position P13 am Leitwerk 4 gegen die reduzierte Frequenz k aufgetragen ist. Die reduzierte Frequenz ist dabei gleich dem durch die Anströmgeschwindigkeit geteilten Produkt der Frequenz der Druckbeiwertschwankungen mit der Bezugsflügeltiefe des Leitwerks 4. Der Anstellwinkel α beträgt dabei jeweils 10° und der Ausschlagwinkel η_{AB} = 60°.

Figur 9 zeigt insbesondere ein Leistungsspektrum 25 der Druckbeiwertsschwankungen bei einer Verwendung einer Bremsklappe ohne Durchführungen. Das Leistungsspektrum 25 weist mit dominierenden Frequenzen verknüpfte Fluktuationsspitzen 26 auf. Ein weiteres in Figur 9 dargestelltes Leistungsspektrum 27 zeigt die spektrale Verteilung der Druckbeiwertsschwankungen in dem Fall der Bremsklappe 6 mit rumpfnahen Durchführungen 8 und der rumpffernen Durchführung 7. Anhand Figur 9 ist erkennbar, dass das Leistungsspektrum 27 im Bereich der Fluktuationsspitzen mehr als eine Größenordnung unterhalb des Leitungsspektrums 25 liegt. Die korrespondierenden Leistungsspektren 25 und 27 belegen, dass nicht nur das Schwankungsniveau insgesamt, sondern vor allem auch die mit den Wirbelablösungen verbunden, mit einer dominierenden Frequenz einhergehenden Fluktuation deutlich abgemindert werden. Die einer dominierenden Frequenz zugeordneten Leistungsspitzen in den Druckspektren verringern sich daher erheblich.

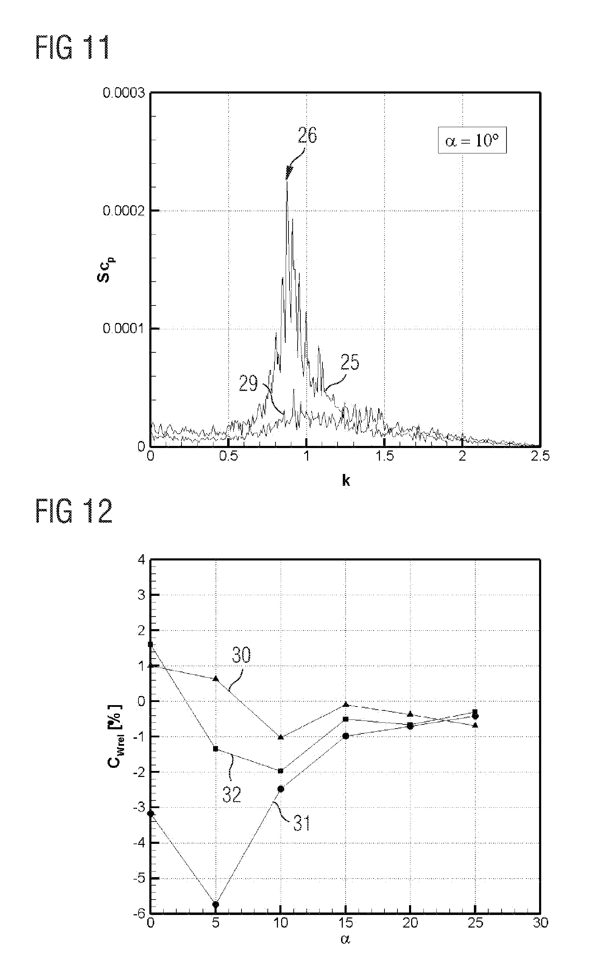

In den Figuren 10 und 11 sind weitere Leistungsspektren 28 und 29 dargestellt. Das Leistungsspektrum 28 in Figur 10 ergibt sich, wenn eine Bremsklappe mit der rumpffernen Durchführung 7 versehen wird, während sich das in Figur 11 dargestellte Leistungsspektrum 29 sich ergibt, wenn eine Bremsklappe nur mit den beiden rumpfnahen Durchführungen versehen ist. Auch in diesen beiden Fällen ergibt sich eine signifikante Abminderung der Fluktuationsspitzen 26.

Es sei angemerkt, dass die Abminderung der Fluktuationsspitzen bei größeren Anstellwinkeln η_{AB} noch stärker ausgeprägt ist.

Durch die Verwendung der schlitzförmigen Durchführungen 7 und 8 in der Bremsklappe 6 kann demnach die aerodynamische Anregung an den im Nachlauf 13 befindlichen Strukturelementen bei Hochleistungsflugzeugen wesentlich vermindert werden. Die schlitzförmigen Durchführungen 7 und 8 der Bremsklappe 6 sind dabei in ihrer Größe und Position an die vorherrschende Geometrie der Bremsklappe 6 und die einwirkenden Strömungsverhältnisse, insbesondere dem periodischen Wirbelnachlauf und das Auftreten von aufgeplatzten Vorderkantenwirbeln anzupassen.

Die durch mit dem Vorsehen der Durchführungen 7 und 8 verknüpfte Verringerung des Luftwiderstands ist gering, wie von Figur 12 abgelesen werden kann. In Figur 12 ist die relative Veränderung des Strömungswiderstandskoeffizient c_{W} in Abhängigkeit vom Anstellwinkel α bei einer um einen Ausschlagwinkel η_{AB} = 60° ausgeklappten Bremsklappe 6 dargestellt. Der relative Strömungswiderstandskoeffizient c_{wrel} ist dabei immer auf den Strömungswiderstandskoeffizienten einer Bremsklappe ohne Durchführungen bezogen. Eine Widerstandskurve 30 gibt dabei die relative Widerstandsänderung für den Fall wider, dass lediglich die rumpfnahen Durchführungen 8 vorhanden sind. Eine weitere Widerstandskurve 31 veranschaulicht den Fall, dass nur die rumpfferne Durchführung 7 in der Bremsklappe ausgebildet ist. Der Fall der Bremsklappe 6, die sowohl die rumpfnahen Durchführungen 8 als auch die rumpfferne Durchführung 7 aufweist, wird durch eine Widerstandskurve 34 wiedergegeben. Die Widerstandskurven 32, 33 und 34, deren Genauigkeit im Ein-Prozentbereich liegen, zeigen eine Widerstandsänderung im einstelligen Prozentbereich. Demnach beeinträchtigen die Durchführungen 7 und 8 den erzielbaren Luftwiderstand nicht wesentlich.

Abschließend sei noch darauf hingewiesen, dass Merkmale und Eigenschaften, die im Zusammenhang mit einem bestimmten Ausführungsbeispiel beschrieben worden sind, auch mit einem anderen Ausführungsbeispiel kombiniert werden können, außer wenn dies aus Gründen der Kompatibilität ausgeschlossen ist.

Schließlich wird noch darauf hingewiesen, dass in den Ansprüchen und in der Beschreibung der Singular den Plural einschließt, außer wenn sich aus dem Zusammenhang etwas anderes ergibt. Insbesondere wenn der unbestimmte Artikel verwendet wird, ist sowohl der Singular als auch der Plural gemeint.

## Patentansprüche

1. Vorrichtung zum Erzeugen von aerodynamischen Widerstand an einem Luftfahrzeug mit wenigstens einer Bremsklappe (6), die in einen ein Seitenleitwerk anströmmenden Luftstrom ausklappbar ist,
**dadurch gekennzeichnet, dass**
die wenigstens eine Bremsklappe (6) mit wenigstens einer Durchführung (7, 8) versehen ist, die der Impulserhöhung der Luft im Windschatten der Bremsklappe (6) dient.

2. Vorrichtung nach Anspruch 1,
**dadurch gekennzeichnet, dass**
die Dicke der Bremsklappe (6) von einem rumpfnahen Ende (20) zu einem rumpffernen Ende (19) abnimmt.

3. Vorrichtung nach Anspruch 1 oder 2,
**dadurch gekennzeichnet, dass**
die wenigstens eine Durchführung (7, 8) von einem in der Bremsklappe (6) ausgebildeten Schlitz gebildet ist, der entlang einer Längsachse (18) von einem rumpfnahen Ende (20) zu einem rumpffernen Ende (19) verläuft.

4. Vorrichtung nach Anspruch 1 oder 2
**dadurch gekennzeichnet, dass**
eine Durchführung (7) im rumpffernen Bereich der Bremsklappe (6) angeordnet ist.

5. Vorrichtung nach Anspruch 4,
**dadurch gekennzeichnet, dass**
die Durchführung (7) im rumpffernen Bereich der Bremsklappe (6) ein trapezförmiges Querschnittsprofil aufweist.

6. Vorrichtung nach Anspruch 5,
**dadurch gekennzeichnet, dass**
eine rumpfnahe Unterseite der Durchführung (7) eine Breite zwischen 0,25 B und 0,35 B einer Basisbreite B der Bremsklappe (6) und eine rumpfferne Oberseite der Durchführung (7) eine Breite zwischen 0,15 B und 0,2 B der Basisbreite B der Bremsklappe (6) aufweist und dass die Länge der Durchführung zwischen 0,25 L und 0,35 L der Länge L der Bremsklappe (6) beträgt.

7. Vorrichtung nach einem der Anspüche 1 bis 5
**dadurch gekennzeichnet, dass**
wenigstens eine Durchführung (8) im rumpfnahen Bereich der Bremsklappe (6) angeordnet ist.

8. Vorrichtung nach Anspuch 6
**dadurch gekennzeichnet, dass**
die Bremsklappe (6) in einem rumpfnahen Bereich wenigstens zwei Durchführungen (8) aufweist.

9. Vorrichtung nach Anspruch 7,
**dadurch gekennzeichnet, dass**
die Durchführungen (8) eine rechteckförmigen Querschnitt aufweisen und dass eine Breite einer Durchführung (8) zwischen 0,1 B und 0,2 B der Basisbreite B der Bremsklappe (6) liegt und dass eine Länge der Durchführung (8) zwischen 0,25 L und 0,35 L der Länge der Bremsklappe (6) beträgt.

10. Luftfahrzeug mit einer Vorrichtung zum Erzeugen von aerodynamischen Widerstand mithilfe einer Bremsklappe (6), die in einen das Luftfahrzeug umgebenden Luftstrom ausklappbar ist
**dadurch gekennzeichnet, dass**
die Vorrichtung nach einem der Ansprüche 1 bis 8 ausgestaltet ist.

11. Luftfahrzeug nach Anspruch 9.
**dadurch gekennzeichnet, dass**
sich eine entlang der Längsachse (10) des Luftfahrzeugs erstreckende Symmetrieebene der Bremsklappe (6) mit eine sich entlang der Längsachse (10) des Luftfahrzeugs erstreckenden Symmetrieebene des Seitenleitwerks (4) deckt.

12. Verfahren zum Erzeugen von aerodynamischen Widerstand an einem Luftfahrzeug, bei dem eine Bremsklappe in einen ein Seitenleitwerk anströmenden Luftstrom ausgeklappt wird,
**dadurch gekennzeichnet, dass**
eine Bremsklappe einer Vorrichtung nach einem der Ansprüche 1 bis 8 ausgeklappt wird.
